# EUROPÄISCHE PATENTANMELDUNG

(11) **EP 0 713 805 A1**
(43) Veröffentlichungstag der Anmeldung: **29.05.1996**
(21) Anmeldenummer: 95116423.5
(22) Anmeldetag: 18.10.1995
(51) Int. Cl.: B60R 7/02

(54) **Kofferraumstauvorrichtung**

(30) Priorität: 25.11.1994 DE 4442042
(71) Anmelder: GEORG NÄHER GmbH, D-71706 Markgröningen (DE)
(72) Erfinder: Kobiela, Andreas, D-70563 Stuttgart (DE)
(74) Vertreter: Müller-Boré & Partner Patentanwälte

(57) **Zusammenfassung**

Die vorliegende Erfindung betrifft eine Vorrichtung zum Verstauen von Gegenständen im Kofferraum eines Kraftfahrzeuges, die einen Behälter (1) aufweist, welcher in einem Bereich im vorderen oberen Abschnitt des Kofferraumes bzw. Laderaumes des Fahrzeuges derart angebracht ist, daß der Stauraum in dem Behälter (1) vom Kofferraum und/oder Innenraum aus zugänglich ist.

## Beschreibung

Die vorliegende Erfindung betrifft eine Vorrichtung zum Verstauen von Gegenständen in einem Kofferraum eines Kraftfahrzeuges.

Stauhilfen für Kofferräume sind hinlänglich bekannt und im Einsatz. Üblicherweise handelt es sich um Netz- bzw. Riemenkonstruktionen zum Befestigen von Gepäckstücken oder anderen Gegenständen an feststehenden Karosserieteilen des Fahrzeuges. Des weiteren werden zum Beladen von Kofferräumen häufig Wannen aus Kunststoff oder Kisten verwendet. Ebenfalls bekannt sind Werkzeugtaschen und andere Taschen, welche mittels Klettverschluß an der Verkleidung des Kofferraums befestigt werden.

Ziel der vorliegenden Erfindung ist es, den Laderaum bzw. Kofferraum effektiv nutzbarer zu machen, bei einer möglichst benutzerfreundlichen Beladbarkeit.

Dieses Ziel wird durch eine Vorrichtung gemäß Anspruch 1 erreicht. Hierbei wird ein Behälter in einem Bereich im vorderen oberen Abschnitt des Kofferraumes bzw. Laderaumes des Fahrzeuges angebracht, also einem toten Raum, welcher nur schwer zugänglich ist und meistens ungenutzt verbleibt. Der so geschaffene Stauraum ist vom Kofferraum aus zugänglich. Die oben beschriebene Vorrichtung ist für normale PKW-Typen und/oder Fahrzeuge vom Vans- oder Combi-Typs und/oder Geländewagen vorgesehen, d.h. mit einem am Heck angeordneten Kofferraum bzw. Stau- bzw. Laderaum, jedoch läßt sich die gleiche Vorrichtung in einem Fahrzeug mit Frontkofferraum ebenso realisieren. Für Fahrzeuge mit Frontkofferraum wird entsprechend der obere hintere Abschnitt des Kofferraumes verwendet. Alle folgenden Bezugnahmen erfolgen für ein Fahrzeug mit Heckkofferraum oder Heckladeraum. Für Fahrzeuge mit Frontkofferraum sind die Richtungsangaben entsprechend umzukehren.

Bevorzugt ist der Behälter derart gelagert, daß er in Richtung des Fahrzeughecks und/oder des Innenraums ausziehbar ist. Z.B. stellt der Behälter eine Art Schublade dar, welche im verschlossenen Zustand im wesentlichen unterhalb der Hutablage bzw. Rollo bzw. Abdeckung angeordnet ist, und im ausgezogenen Zustand über den Kofferraumdeckel und/oder vom Innenraum her beladbar ist.

Bevorzugt ist der Behälter am vorderen Abschnitt schwenkbar bzw. drehbar und/oder verschiebbar gelagert. Somit kann der hintere Abschnitt des Behälters nach unten geklappt und/oder nach hinten oder vorne verschoben werden, um den Stauraum besser zugänglich zu machen.

Alternativ ist der Behälter so gelagert, daß er zu seiner Ausgangslage parallel verschwenkbar ist. Dies kann z.B. durch eine Parallelogrammlagerung erreicht werden. Somit wird der Stauraum besonders einfach vom Kofferraum aus zugänglich.

Bevorzugt ist der Behälter mit einer Griffvorrichtung versehen. Die Griffvorrichtung kann zum Ergreifen und Bewegen des Behälters verwendet werden. Wenn der Behälter antreibbar oder vorspannbar ist, kann alternativ oder zusätzlich ein Schalter bzw. Auslöser vorgesehen sein.

Bevorzugt ist der Stauraum in dem Behälter auch vom Innenraum des Fahrzeuges zugänglich. Dies kann durch eine Öffnung in der Hutablage bzw. Rollo (z.B. bei fahrzeugen des Vans- oder Combi-Typs) oder durch einen Durchbruch im Rückenlehnenbereich erfolgen.

Desweiteren bevozugt umfaßt der Behälter eine oder mehrere Verschlußeinrichtungen. Somit wird ein zusätzlicher verriegelbarer Stauraum innerhalb des Kofferraumes geschaffen, was einen zusätzlichen Schutz bei einem Diebstahl des Gepäcks aus dem Kofferraum darstellt.

Vorzugsweise umfaßt die Vorrichtung eine oder mehrere Antriebseinrichtungen. Durch die Antriebseinrichtungen kann der Behälter motorisch oder durch Vorspannung automatisch bewegt werden, um den Stauraum des Behälters zugänglich bzw. besser zugänglich zu machen, was insbesondere bei schwerem Staugut von Vorteil ist. Bevorzugt weist die Antriebseinrichtung bevorzugt einen elektrischen und/oder pneumatischen und/oder hydraulischen Antrieb auf.

Mit Vorteil umfaßt die Vorrichtung Gasfedern zum Dämpfen der Bewegungen des Behälters. Insbesondere beim Klappen bzw. Schwenken ist es wünschenswert, daß die Bewegung relativ langsam erfolgt, damit die in dem Stauraum vorhandene Ordnung erhalten bleibt und damit zerbrechliche Teile beim Öffnen bzw. Schließen des Behälters nicht einer Stoßwirkung unterliegen.

Bevorzugt besitzt die Vorrichtung Einrichtungen zum variablen Einstellen der Stauraumhöhe zwischen dem Behälter und dem darüberliegenden Abschnitt der Karosserie, in der Regel der Hutablage bzw. dem Rollo. Diese kann besonders nützlich sein, wenn in dem Stauraum ein Gegenstand aufbewahrt werden soll, der die Höhe des Behälters übersteigt.

Desweiteren bevorzugt ist diese Stauraumhöheneinstellung selbstregelnd. Somit wird der Behälter in einer Lage verharren, in der ein Widerstand gegen die Schließbewegung entsteht, z.B. wenn ein Gegenstand in dem Behälter gegen die Hutablage bzw. den Rollo oder ähnlichen Abdeckung stößt.

Bevorzugt umfaßt der Behälter Raumeinteilungen oder Staugutbefestigungseinrichtungen, um eine effektivere Nutzung des Stauraumes zu ermöglichen bzw. um einzelne z.B. kleinere Gegenstände darin zu fixieren.

Mit Vorteil umfaßt der Behälter kofferraumseitig und/oder innenraumseitig eine Klappe zum Beladen des Stauraumes. Dies kann vorteilhaft sein, wenn nur ein kleiner Gegenstand bzw. ein leichter Gegenstand aus oder in den Stauraum befördert werden soll. Zusätzlich kann diese Klappe innen- und/oder aussenseitig mit Vorrichtungen versehen sein zum Aufnehmen/Fixieren von Stiften oder ähnlichen Kleinteilen.

Weitere Vorteile, Merkmale und Anwendungsmöglichkeiten der vorliegenden Erfindung ergeben sich aus der nachfolgenden Beschreibung der Ausführungsbeispiele in Verbindung mit der Zeichnung.

Figur 1 zeigt eine bevorzugte Ausführungsform der vorliegenden Erfindung.

Figur 2a zeigt eine alternative Ausführungsform bei gekippter, jedoch unausgezogener Stellung des Behälters 1.

Figur 2b ist ähnlich zu Figur 2a, jedoch ist der Behälter 1 ausgezogen und gekippt.

Figur 3a zeigt eine alternative Ausführungsform der Erfindung bei einer geschlossenen Position des Behälters 1.

Figur 3b zeigt die Ausführungsform von Figur 3b, wobei der Behälter 1 ausgezogen ist.

Figur 3c ist ähnlich wie Figur 3b, jedoch ist der Behälter 1 zusätzlich nach unten verschwenkt, wobei ein Beladevorgang durch einen Aktenkoffer angedeutet ist.

Figur 4 zeigt einige Anwendungsbeispiele für die verschiedenen Ausführungsformen.

Figur 5 zeigt eine weitere Ausführungsform der vorliegenden Erfindung für ein Fahrzeug vom Combi-Typ.

Figur 6 zeigt eine weitere Ausführungsform der vorliegenden Erfindung.

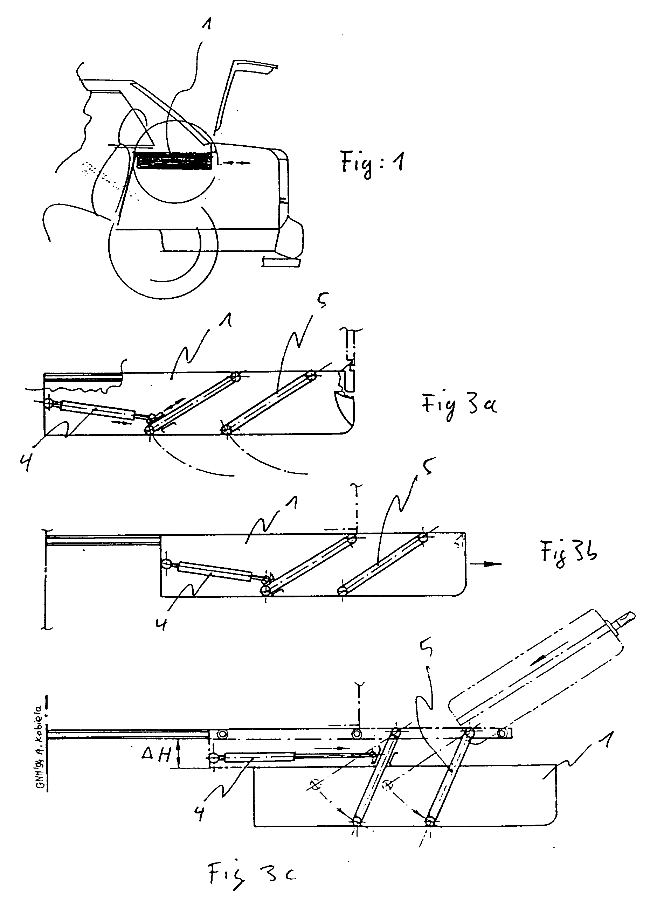

In Figur 1 ist eine bevorzugte Ausführungsform gezeigt. In dieser Ausführungsform ist ein Behälter 1 im vorderen oberen Abschnitt des Kofferraumes, insbesondere unterhalb der Hutablage angebracht. Der Behälter 1 ist ausziehbar gelagert, so daß er in Richtung des Fahrzeughecks ausgezogen werden kann.

Der Raum, in dem die Vorrichtung angeordnet ist, ist in den meisten Fällen ungenutzt. Zusätzlich kann die Vorrichtung eine Höhenverstellbarkeit (nicht gezeigt) aufweisen.

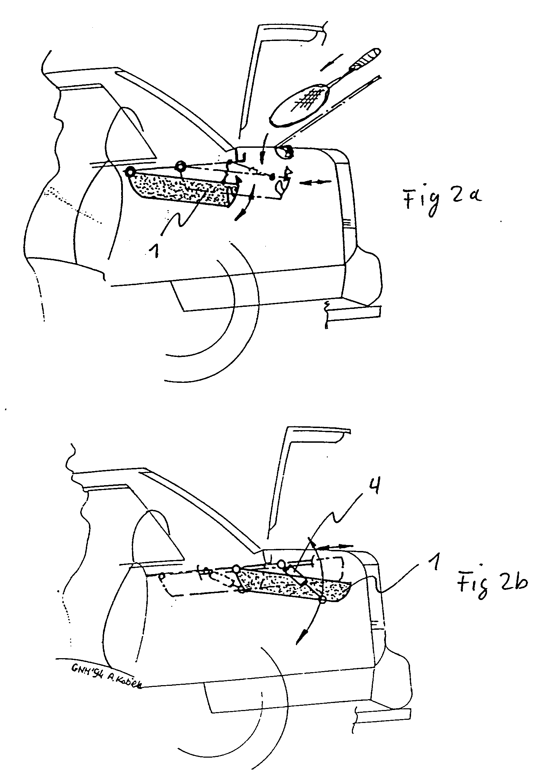

In Figur 2a ist eine alternative Ausführungsform gezeigt. In dieser Ausführungsform ist der Behälter 1 an seinem vorderen Abschnitt drehbar gelagert, so daß der hintere Abschnitt nach unten gekippt werden kann, so daß der Stauraum, wie durch den Tennisschläger und den Golfschläger angedeutet, vom Kofferraum aus zugänglich ist. Zusätzlich zu der Kippbewegung ist der Behälter 1 ebenfalls ausziehbar, wie es in Figur 2 angedeutet ist, um den Stauraum bequemer zuganglich zu machen. Des weiteren ist in Figur 2 gezeigt, daß die Vorrichtung Gasfedern 4 umfaßt, um zum einen die Kippbewegung zu dämpfen und zum anderen, einen Anschlag für die Kippbewegung bereitzustellen.

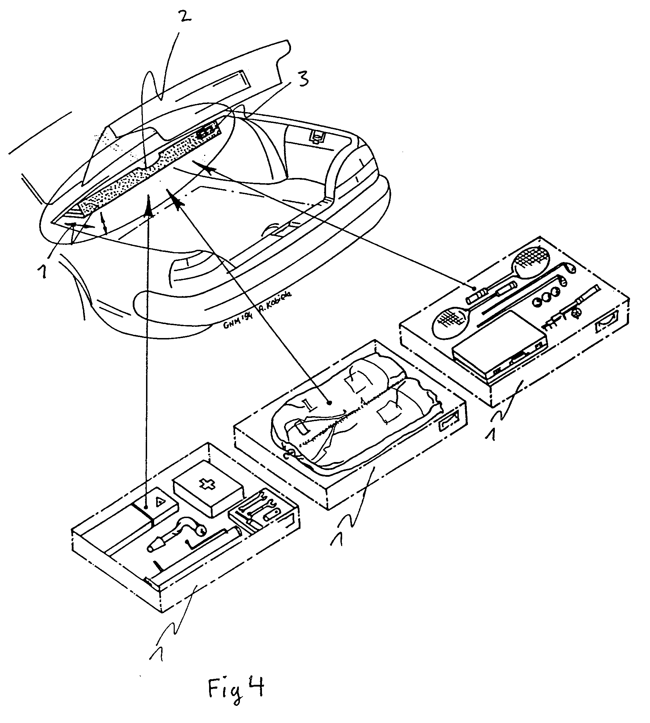

Figur 3a zeigt eine weitere alternative Ausführungsform der vorliegenden Erfindung, wobei der Behälter 1 in seiner geschlossenen Position gezeigt ist. In Figur 3b ist zu erkennen, daß der Behälter 1 ausziehbar gelagert ist. In Figur 3c ist die parallele Verschwenkbarkeit des Behälters 1 gezeigt. In diesem Ausführungsbeispiel umfaßt die Vorrichtung eine Linearführung, ähnlich wie sie bei Schubladen verwendet wird, und eine Parallelogrammlagerung 5, um die Schwenkbewegung zu ermöglichen. In diesem Ausführungsbeispiel sind ebenfalls Gasfedern 4 vorgesehen, um die Schwenkbewegung zu dämpfen und um die Schließkraft zu reduzieren, wenn der Behälter 1 beladen ist. Desweiteren ist in Figur 3c angedeutet, wie eine selbstregelnde Stauraumhöheneinstellung funktioniert. Der Behälter 1 wird so lange nach oben verschwenkt bis ein Widerstand durch ein Anstoßen eines in dem Stauraum befindlichen Gegenstandes gegen die Hutablage erfolgt.

Figur 4 zeigt Anwendungsmöglichkeiten der vorliegenden Erfindung, wobei eine Griffvorrichtung 2 sowie ein Auslöser bzw. Schalter 3 zum Betätigen einer angetriebenen Vorrichtung angedeutet sind. Desweiteren sind einige Beispiele für Raumaufteilungen des Stauraumes bzw. Anwendungsmöglichkeiten gezeigt.

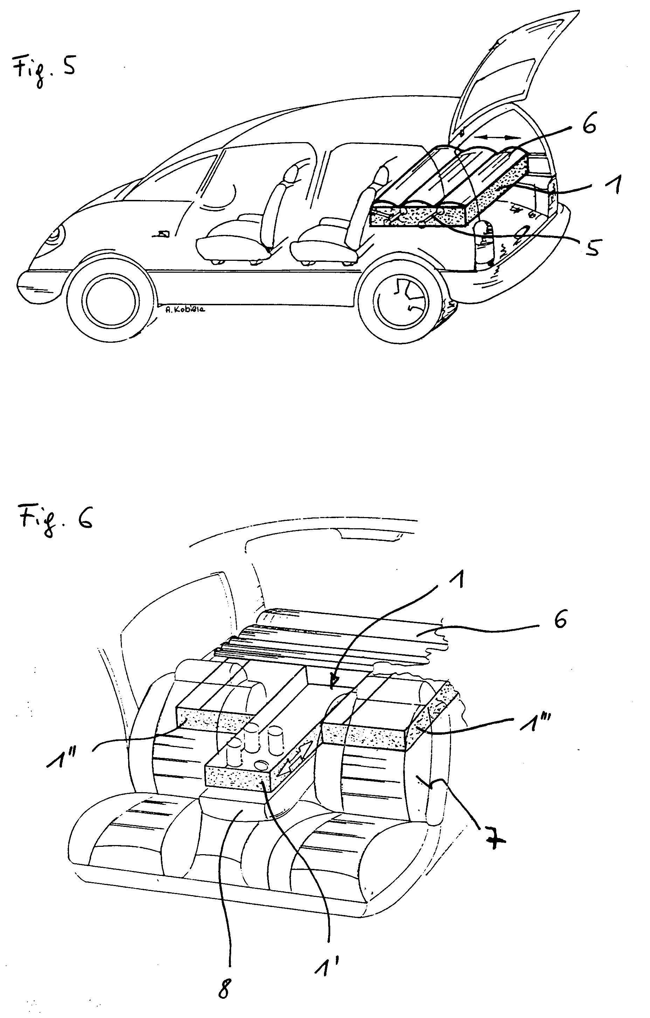

In Figur 5 ist eine weitere Ausführungsform der vorliegenden Erfindung gezeigt, welche für ein Fahrzeug vom Combi-Typ bzw. für ein fünftüriges Fahrzeug geeignet ist. Der Behälter 1 ist hierbei in dem hinteren Laderaum, insbesondere unterhalb von einem Rollo bzw. Abdeckung 6 gelagert. Die Lagerung des Behälters 1 kann durch eine Gleitlagerung, um eine Parallelverschiebung in der Horizontalen bzw. in einer gleichen Ebene zu erzielen, oder durch eine Parallelogrammlagerung 5 erfolgen, um eine horizontale und vertikale Parallelversetzung zu erzielen. Um einen Zugang zu dem Inneren des Behälters 1 zu ermöglichen, kann bei diesem Fahrzeugtyp entweder der Behälter 1 bewegt oder die Abdeckung 6 verschoben bzw. aufgerollt werden.

Der Behälter 1 kann alternativ nur mittels einer (nicht gezeigten) Einhängeinrichtung im hinteren Laderaum des Fahrzeugs eingehängt sein ohne beweglich gelagert bzw. getragen zu sein. Diese konstruktiv sehr einfache Ausgestaltung erlaubt eine einfache und kostengünstige Bereitstellung von zumindest zwei Ladeebenen zur Aufnahme von z.B. leicht zerbrechlichen und/oder nicht stapelbaren Gegenständen. Bei Bedarf kann die obere Abdeckung bzw. Rollo 6 weggelassen oder aufgerollt werden, wodurch auch während der Fahrt ein Zugang zumindest zu der oberen Ladeebene bzw. dem Behälter 1 ermöglicht wird.

In Figur 6 ist eine weitere bevorzugte Ausführungsform der vorliegenden Erfindung dargestellt, in welcher der Behälter 1 von dem Innenraum bzw. der Fahrgastzelle aus zugänglich ist. Die dargestellte Ausführungsform ist in Fig. 6 für ein Fahrzeug des Combi-Typs dargestellt, jedoch ist sie auch für einen normalen PKW-Typ geeignet.

Der Behälter 1 weist bevorzugt zumindest zwei Behälterabschnitte, besonders bevorzugt drei Behälterabschnitte 1', 1'', 1''' auf, und die Rückbank ist z.B. durch eine Armlehne 8 geteilt bzw. die Rück- bzw. Fondsitze 7 sind voneinander getrennt. Somit kann, insbesondere während der Fahrt des Fahrzeuges, ein Behälterabschnitt 1' durch die getrennten Rücksitze 7 nach vorne verschoben bzw. geschwenkt werden, um einen Zugang zu dem Inneren des Behälters 1, insbesondere des Behälterabschnittes 1' zu ermöglichen. Weiterhin kann der herausgezogene Behälterabschnitt 1' auch zum zeitweisen Ablegen von Gegenständen (z.B. von einer Handtasche, Getränken, Straßenkarten, usw.) während der Fahrt dienen.

Sämtliche Ausführungsformen können mit einer Antriebsvorrichtung versehen sein, sei es nun ein elektrischer Antrieb, eine Federvorspannung oder jegliches anderes geeignetes Antriebssystem. Des weiteren kann auch in jeder Ausführungsform der Stauraum aus dem Fahrgastraum zugänglich sein, z.B. über die Hutablage oder durch eine Durchgangsöffnung durch den Rückenlehnenbereich.

Zusammenfassend läßt sich sagen, daß die vorliegende Erfindung eine Möglichkeit bereitstellt zum effektiven und bequemen Ausnutzen eines Abschnittes des Kofferraumes, welcher üblicherweise ungenutzt bleibt.

## Patentansprüche

1. Vorrichtung zum Verstauen von Gegenständen im Kofferraum eines Kraftfahrzeuges, die einen Behälter (1) aufweist, welcher in einem Bereich im vorderen oberen Abschnitt des Kofferraumes bzw. Laderaumes des Fahrzeuges derart angebracht ist, daß der Stauraum in dem Behälter (1) vom Kofferraum und/oder Innenraum aus zuganglich ist.

2. Vorrichtung nach Anspruch 1, wobei der Behälter (1) derart gelagert ist, daß er in Richtung des Fahrzeugheckes und/oder Innenraum ausziehbar ist.

3. Vorrichtung nach Anspruch 1 oder 2, wobei der Behälter (1) am vorderen Abschnitt schwenkbar und/oder verschiebbar gelagert ist, so daß der hintere Abschnitt nach unten kippbar ist.

4. Vorrichtung nach Anspruch 1 oder 2, wobei der Behälter (1) im wesentlichen parallel zu seiner Ausgangslage verschwenkbar gelagert ist.

5. Vorrichtung nach einem der vorangegangenen Ansprüche, wobei der Behälter (1) mit einer Griffvorrichtung (2) und/oder einem Aulöser bzw. Schalter (3) versehen ist.

6. Vorrichtung nach einem der vorangegangenen Ansprüche, wobei der Behälter (1) vom Innenraum des Fahrzeuges über die Hutablage bzw. Abdeckung (6) oder über einen Durchbruch im Rückenlehnenbereich (8) zugänglich ist.

7. Vorrichtung nach einem der vorangegangenen Ansprüche, wobei der Behälter (1) mit einer oder mehreren Verschlußeinrichtungen versehen ist.

8. Vorrichtung nach einem der vorangegangenen Ansprüche, wobei die Vorrichtung eine oder mehrere Antriebseinrichtungen für den Behälter (1) umfaßt, um den Stauraum des Behälters (1) zugänglich bzw. besser zugänglich zu machen, wobei die Antriebseinrichtung bevorzugt einen elektrischen und/oder pneumatischen und/oder hydraulischen Antrieb aufweist.

9. Vorrichtung nach einem der vorangegangenen Ansprüche, wobei die Vorrichtung Elemente zum Dämpfen von Bewegungen des Behälters (1), vorzugsweise Gasfedern (4) umfaßt.

10. Vorrichtung nach einem der vorangegangenen Ansprüche, wobei die Vorrichtung Einrichtungen zum variablen Einstellen der Stauraumhöhe zwischen dem Behälter (1) und der Hutablage bzw. Abdeckung (6) umfaßt, wobei die Stauraumhöheneinstellung bevorzugt selbstregelnd ist.

11. Vorrichtung nach einem der vorangegangenen Ansprüche, wobei der Behälter (1) mit einer Raumeinteilung und/oder einer Staugutbefestigungseinrichtung versehen ist.

12. Vorrichtung nach einem der vorangegangenen Ansprüche, wobei der Behälter (1) kofferraumseitig und/oder innenraumseitig eine Klappe zum Beladen des Stauraumes umfaßt.
